# DEMANDE DE BREVET EUROPEEN

(11) **EP 4 567 357 A1**
(43) Date de publication de la demande: **11.06.2025**
(21) Numéro de dépôt: 24211032.8
(22) Date de dépôt: 06.11.2024
(51) Int. Cl.: F25J 1/00, F25J 1/02, B01D 53/00, F25J 3/04

(54) **POT SÉPARATEUR ET INSTALLATION COMPRENANT UN TEL POT**

(30) Priorité: 06.12.2023 FR 2313646
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: CHAIX, Jean-Baptiste, 94503 Champigny-sur-Marne (FR); CARAFA, Antony, 94503 Champigny-sur-Marne (FR); HAIK, Natacha, 94503 Champigny-sur-Marne (FR); LE LARGE, Dominique, 94503 Champigny-sur-Marne (FR); GRANADOS, Ludovic, 94503 Champigny-sur-Marne (FR)
(74) Mandataire: Air Liquide

(57) **Abrégé**

L'invention concerne un pot séparateur des phases liquide et gazeuse comprenant un récipient (1) de forme générale cylindrique s'étendant selon un direction (A) longitudinale qui est horizontale, la partie inférieure étant pourvue d'une excroissance (11) s'étendant vers le bas et formant un volume supplémentaire communiquant avec le reste du volume cylindrique du récipient (1), une première entrée (2) de fluide située dans sa partie supérieure, une première sortie (3) située en partie inférieure de l'excroissance (11), la première entrée (2) et la première sortie (3) étant destinées à être raccordées à un premier échangeur (4) de chaleur pour former un thermosiphon, le récipient (1) comprenant une seconde entrée (6) distincte de la première entrée (2) et située dans sa partie supérieure et une seconde sortie (7) distincte de la première sortie (3) et située dans sa partie supérieure, la seconde entrée (6) et la seconde sortie (7) étant configurées pour être reliées à au moins un second (5, 8) échangeur de chaleur et pour respectivement collecter un fluide et renvoyer un fluide gazeux.

## Description

L'invention concerne un pot séparateur et installation comprenant un tel pot.

L'invention concerne plus particulièrement un pot séparateur des phases liquide et gazeuse, par exemple pour une installation de liquéfaction d'un gaz tel que l'azote ou l'hydrogène, comprenant un récipient de forme générale cylindrique s'étendant selon un direction longitudinale qui est horizontale en configuration d'utilisation, la partie inférieure du récipient étant pourvue d'une excroissance s'étendant vers le bas et formant un volume supplémentaire communiquant avec le reste du volume cylindrique du récipient.

Un pot séparateur (ou pot de séparation) est utilisé dans des installations cryogéniques, telles que les liquéfacteurs, pour séparer des phases d'un fluide cryogénique.

Par exemple, dans le cas des liquéfacteurs d'azote ou d'hydrogène, un cycle azote permet le refroidissement au moins partiel du fluide à liquéfier. Ce cycle inclut le plus souvent les éléments suivants : une turbine dont le fluide en sortie peut être diphasique, un échangeur de chaleur fonctionnant en thermosiphon, un échangeur de chaleur supplémentaire, un pot de séparation de phases, une production de liquide dans l'échangeur principal permettant d'alimenter en liquide ledit pot.

Un tel pot est donc soumis à des contraintes multiples : dimensions pour s'intégrer dans un installation, nécessité d'être pourvu d'entrée(s) sortie(s) multiples permettant un bon fonctionnement.

Il existe en particulier des pots de séparation horizontaux et verticaux avec plusieurs entrées et plusieurs sorties de fluide. Ces différentes contraintes ne permettent pas toujours d'intégrer le pot dans des installations complexes ou l'espace disponible est limité.

Un but de la présente invention est de pallier tout ou partie des inconvénients de l'art antérieur relevés ci-dessus.

A cette fin, le pot séparateur selon l'invention, par ailleurs conforme à la définition générique qu'en donne le préambule ci-dessus, est essentiellement caractérisé en ce que le récipient comprend une première entrée de fluide située dans sa partie supérieure, une première sortie située en partie inférieure de l'excroissance, la première entrée et la première sortie étant destinées à être raccordées à un premier échangeur de chaleur pour former un thermosiphon, le récipient comprenant une seconde entrée distincte de la première entrée et située dans sa partie supérieure et une seconde sortie distincte de la première sortie et située dans sa partie supérieure, la seconde entrée et la seconde sortie étant configurées pour être reliées à au moins un second échangeur de chaleur et pour respectivement collecter un fluide au moins en partie liquide et renvoyer un fluide gazeux. La présente invention permet une optimisation du dimensionnement d'un pot séparateur de phases. L'invention permet de prévoir une multitude d'entrées et de sorties sur le pot tout en permettant un dimensionnement compact s'intégrant aisément dans des architecture globales d'installations cryogéniques.

Par ailleurs, des modes de réalisation de l'invention peuvent comporter l'une ou plusieurs des caractéristiques suivantes :
- l'excroissance a une forme cylindrique s'étendant selon un axe vertical et un diamètre dans un plan perpendiculaire à l'axe vertical qui est compris entre 100 mm et 2000 mm pour limiter l'entraînement de bulles avec le liquide,
- la hauteur entre l'extrémité inférieure de l'excroissance et l'extrémité supérieure du récipient est comprise entre 150 mm et la section ou diamètre du récipient,
- le récipient comprend une troisième sortie située dans sa partie supérieure et distincte de la seconde sortie, la troisième sortie étant destinée à être reliée par exemple à un second échangeur de chaleur pour lui envoyer un flux de fluide gazeux,
- les sorties situées dans la partie supérieure sont décalées selon la direction (A) longitudinale,
- le récipient comprend une troisième entrée de fluide configurée pour recevoir un flux de fluide gazeux ou diphasique, la troisième entrée de fluide étant située dans la portion supérieure du récipient et étant distincte des première et deuxièmes entrées,
- les entrées situées dans la partie supérieure du récipient sont décalées dans un plan perpendiculaire à la direction longitudinale, par exemple selon un angle compris entre 45 et 90 degrés par rapport à la verticale.

L'invention concerne également une installation cryogénique comprenant un pot séparateur selon l'une quelconque des caractéristiques ci-dessus ou ci-dessous et un premier échangeur de chaleur dont deux extrémités sont raccordées respectivement via des conduites à la première sortie et à la première entrée. Selon d'autres particularités possibles :
- l'installation comprend au moins un second échangeur dont deux extrémités sont raccordées respectivement via des conduites à la seconde entrée et à la seconde sortie,
- le au moins un second échangeur de chaleur comprend plusieurs corps d'échange, les différentes sorties sont reliées respectivement à des corps d'échange différents du même échangeur de chaleur,
- l'installation comprend une turbine dont la sortie de refoulement est raccordée à une entrée du récipient, par exemple une entrée également raccordée au second échangeur de chaleur,
- l'installation comprend un circuit de gaz d'alimentation d'un gaz à liquéfier, un ensemble d'échangeur(s) de chaleur en échange thermique avec le circuit d'alimentation, un réfrigérateur cryogénique en échange de chaleur avec l'ensemble d'échangeur(s) de chaleur et configuré pour (pré)refroidir le circuit de gaz d'alimentation, le réfrigérateur comprenant un circuit de gaz de cycle, par exemple de l'azote, soumis à un cycle thermodynamique pour produire une puissance froide, dans lequel l'ensemble d'échangeur(s) de chaleur comprend au moins l'un parmi le premier échangeur de chaleur, le second échangeur de chaleur, le fluide circulant dans le pot séparateur via les entrée(s) et sorties est le fluide de cycle.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

### Brève description des figures

L'invention sera mieux comprise à la lecture de la description qui va suivre donnée uniquement à titre d'exemple et faite en se référant aux dessins annexés dans lesquels :
[Fig. 1] est une vue schématique et partielle illustrant une installation muni d'un pot séparateur selon l'invention,
[Fig. 2] est une vue de côté, schématique et partielle, illustrant un exemple de pot séparateur selon l'invention,
[Fig. 3] est une vue de face, schématique et partielle, illustrant un exemple de pot séparateur selon l'invention,
[Fig. 4] est une vue schématique et partielle illustrant un autre exemple d'installation muni d'un pot séparateur selon l'invention.

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

Le pot séparateur illustré aux figures comprend un récipient 1 de forme générale cylindrique s'étendant selon une direction A longitudinale qui est horizontale en configuration d'utilisation. Par exemple, le récipient 1 à la forme générale d'un cylindre de section circulaire. Le diamètre (ou section) du récipient 1 est par exemple compris entre 1000mm et 5500mm.

La partie inférieure du récipient 1 est pourvue d'une excroissance 11 s'étendant vers le bas et formant un volume supplémentaire communiquant avec le reste du volume cylindrique du récipient 1.

Comme illustré, cette excroissance 11 peut également avoir une forme générale cylindrique qui s'étend vers le bas (par exemple cette forme cylindrique avec une section circulaire).

Par exemple, l'excroissance 11 a un diamètre dans un plan perpendiculaire à l'axe vertical qui est compris entre 100 mm et 2000 mm pour limiter l'entraînement de bulles avec le liquide. Les dimensions de l'excroissance 11 peuvent être modifiées selon la taille de l'installation.

Comme illustré, le diamètre de l'excroissance 11 est inférieur au diamètre du reste du récipient. Par exemple, l'excroissance 11 permet de créer un niveau liquide dans le récipient 1 principal ne dépassant pas 500mm de hauteur de liquide.

Le récipient 1 comprend une première entrée 2 de fluide située dans sa partie supérieure et une première sortie 3 de fluide située en partie inférieure de l'excroissance 11.

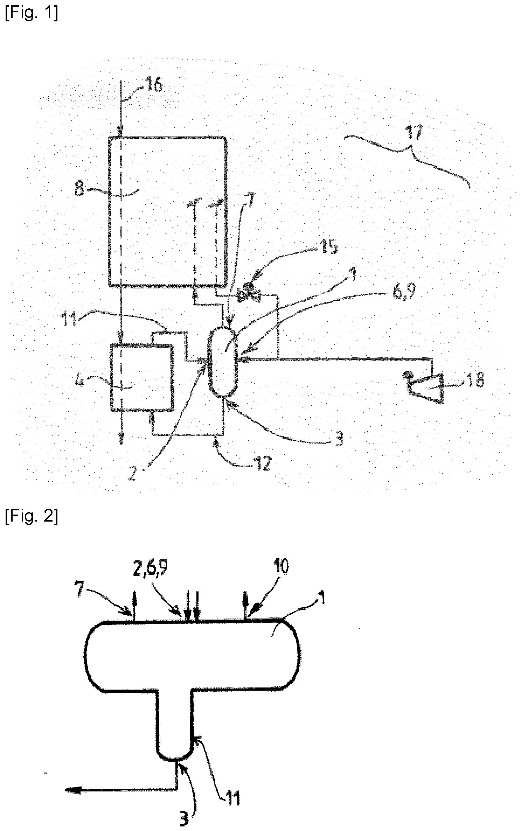

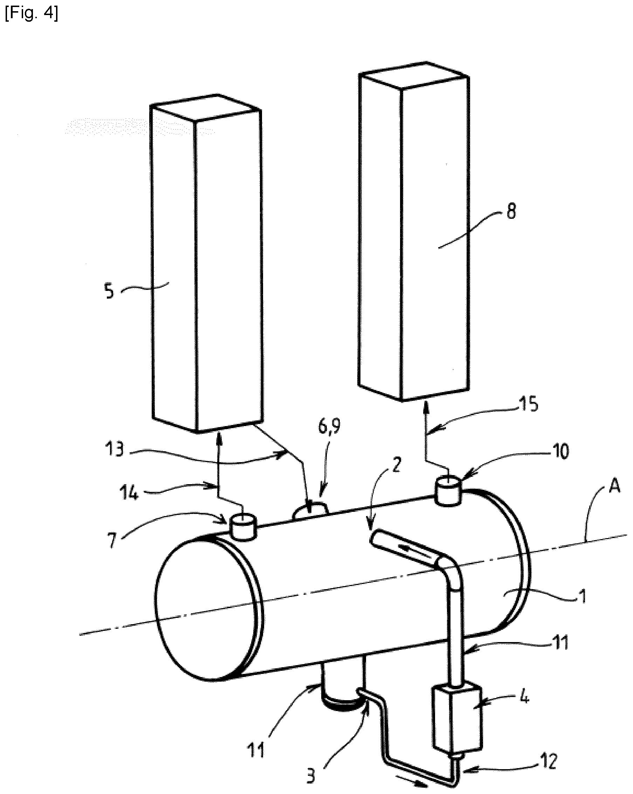

La première entrée 2 et la première sortie 3 sont destinées à être raccordées par exemple à un premier échangeur 4 de chaleur pour former un thermosiphon (cf. [Fig. 1] et [Fig. 4]).

La hauteur entre l'extrémité inférieure de l'excroissance 11 (première sortie 3) et l'extrémité supérieure du récipient 1 (première entrée 2) est comprise de préférence entre 150 mm et la valeur de la section ou diamètre du récipient 1.

Cette hauteur est choisie de préférence de telle sorte que la hauteur hydrostatique soit suffisante pour alimenter un échangeur de chaleur 4 en thermosiphon et/ou pour que le niveau liquide soit toujours présent dans la partie supérieure du récipient 1. L'excroissance est configurée pour que, en fonctionnement, une hauteur hydraulique suffisante soit présente au-dessus de l'entrée fluidique de l'échangeur de chaleur.

Le récipient 1 possède une seconde entrée 6 de fluide qui est distincte de la première entrée 2. Cette seconde entrée 6 est située dans sa partie supérieure.

Le récipient 1 possède en outre une seconde sortie 7 de fluide distincte de la première sortie 3. Cette seconde sortie 7 est située dans la partie supérieure du récipient 1.

La seconde entrée 6 et la seconde sortie 7 sont configurées pour être reliées par exemple à au moins un second 5, 8 échangeur de chaleur et pour respectivement collecter un fluide au moins en partie liquide et renvoyer un fluide gazeux.

Comme illustré, le récipient 1 peut comprendre une troisième sortie 10 située dans sa partie supérieure et distincte de la seconde sortie 7. La troisième sortie 10 est par exemple destinée à être reliée par exemple à ce même second 8 échangeur de chaleur (ou un autre) pour lui envoyer un flux de fluide gazeux.

Comme illustré notamment à la [Fig. 4], les entre/sorties situées dans la partie supérieure peuvent être décalées selon la direction A longitudinale. Par exemple, la seconde 7 sortie et la troisième sortie 10 sont situées respectivement au niveau de deux extrémités longitudinales du récipient 1 tandis que les première 2 et seconde 6 entrées peuvent être situées en partie centrale.

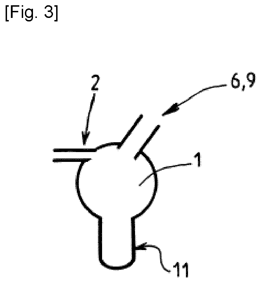

Comme visible à la [Fig. 3], les entrées 2, 6, 9 situées dans la partie supérieure du récipient 1 peuvent être décalées dans un plan perpendiculaire à la direction A longitudinale, par exemple décalées ou orientée relativement selon un angle compris entre 45 et 90 degrés par rapport à la verticale.

Comme schématisé à la [Fig. 1], le récipient 1 peut comprendre une troisième entrée 9 de fluide configurée pour recevoir un flux de fluide gazeux ou diphasique. Cette troisième entrée 9 de fluide est de préférence située dans la portion supérieure du récipient 1, par exemple en partie centrale et peut être distincte des première 2 et deuxièmes 6 entrées (ou peut être confondue avec l'une des première et seconde entrées).

Ainsi, le pot séparateur de phases peut donc posséder une ou plusieurs des entrées suivantes :
- une première entrée 2 pour recevoir un fluide diphasique par exemple de l'azote provenant d'un échangeur 4 de chaleur d'un système de thermosiphon,
- une deuxième entrée 6 pour recevoir un flux liquide, par exemple de l'azote liquide provenant d'un échangeur 8 de chaleur ou provenant de toute autre source. Cet azote liquide peut éventuellement contenir une proportion faible de gaz due à du gaz flash produit dans une vanne 15 de détente disposée en amont du pot séparateur (par exemple moins de 15% en mole de fraction vapeur),
- une troisième entrée 9 (distincte ou confondue avec la deuxième entrée 6) pour un flux gazeux ou diphasique provenant par exemple d'une turbine de détente ou de l'échangeur 8 de chaleur. Ce fluide possède par exemple une fraction liquide inférieure à 15% en mole.

La seconde entrée 6 (pour du liquide) peut être commune avec l'une ou l'autre des autres entrées 2, 9 précitées. Ceci permet de limiter au maximum le nombre d'entrées sur le pot séparateur pour en simplifier sa fabrication.

Le pot séparateur de phases peut posséder une ou plusieurs des sorties suivantes :
- la première sortie 3 pour du liquide, par exemple de l'azote liquide alimentant le premier échangeur 4 de chaleur de thermosiphon,
- un moins une seconde sortie 7 pour du gaz (azote par exemple) qui alimente par exemple le second échangeur 8 de chaleur.

Le pot séparateur illustré en [Fig. 1] notamment permet de réaliser trois fonctions différentes.

Une première fonction est la séparation de phases (liquide et gaz) par exemple pour de l'azote diphasique provenant d'une turbine 18 (avec une fraction liquide inférieure à 20% par exemple).

Une deuxième fonction est l'alimentation du premier échangeur 4 de thermosiphon en liquide et la séparation de phases pour l'azote diphasique sortant du premier échangeur 4 de thermosiphon.

Une troisième fonction est la distribution de gaz (azote par exemple) vers le second échangeur 8 de chaleur (ou échangeur de chaleur principal).

Pour ce qui concerne la première fonction, l'azote légèrement diphasique peut imposer de traiter un débit volumique relativement important. Un pot séparateur de phases vertical aurait impliqué un diamètre et une hauteur de pot très importants pour garantir la bonne séparation. Le pot selon l'invention est horizontal ce qui permet de diminuer la taille du pot séparateur. Pour ce qui concerne la deuxième fonction, le thermosiphon entre la première entrée 2 et la première sortie 3 impose d'avoir une certaine hauteur hydrostatique de liquide déterminée afin de compenser les pertes de charge dans le premier échangeur 4 de thermosiphon. Un pot horizontal rend plus complexe l'obtention de cette hauteur hydrostatique par rapport à un pot vertical. L'excroissance 11 inférieure permet de résoudre ce problème.

La section ou diamètre de cette excroissance 11 peut être choisie pour que la vitesse du liquide en son sein soit suffisamment faible pour éviter l'entraînement de bulles de gaz.

Un niveau de liquide doit s'établir dans la partie principale (supérieure) du pot séparateur afin d'assurer une bonne séparation dans la phase liquide. De plus, pour éviter la formation d'un siphon, le niveau de liquide doit également être suffisamment haut (par exemple supérieur à 15 cm) par rapport au fond et par rapport à la première sortie 3 de l'excroissance 11. Ce paramètre dimensionnel peut être vérifié pour les différents cas de fonctionnement de ce pot séparateur (notamment en cas de marche réduite).

Pour ce qui concerne la troisième fonction, la multiplicité de sortie gaz distinctes permet de réduire le diamètre du pot séparateur et donc son encombrement. En effet, ceci permet de diminuer la vitesse du gaz dans la section du pot séparateur.

Il est ainsi possible d'avoir les configurations suivantes pour le pot séparateur:
- une première entrée diphasique centrale et deux sorties 7, 10 de de gaz latérales,
- deux entrées diphasiques et trois sorties de gaz en quinconce,
- deux entrées diphasiques et quatre sorties gaz latérales opposées.

Ceci montrent que de nombreuses configurations sont possibles. Le gaz sortant de ce pot séparateur peut être envoyé vers au moins un échangeur 5, 8 de chaleur. Cet échangeur de chaleur (par exemple avec la technologie d'échangeur en aluminium brasé) est souvent fait en plusieurs corps d'échange. Il peut être nécessaire d'avoir un distributeur entre ces différents corps. Avec la solution présentée, lorsque l'installation possède quatre corps d'échange, il est possible de prévoir deux sorties gaz ou quatre sorties de gaz pour répartir les flux entre les différents corps d'échange de chaleur. Ceci permet de se passer d'un distributeur.

Le pot séparateur peut être composé d'acier inoxydable ou d'aluminium. Selon le cas, il peut être nécessaire de prévoir des jonctions mixtes entre le pot séparateur en acier inoxydable et un échangeur de chaleur en aluminium (ou alors des soudures aluminium dans le cas d'un pot séparateur en aluminium et d'un échangeur en aluminium, en évitant des jonctions mixtes). L'architecture proposée permet donc d'optimiser l'intégration de ce pot séparateur dans l'architecture globale d'en installation. En effet, le pot séparateur horizontal peut s'insérer sous les corps d'échange d'un échangeur 8 de chaleur et servir ainsi de distributeur de gaz pour ces corps d'échange. Le fait de pouvoir superposer les équipements permet de réduire l'empreinte au sol de cette partie sans augmenter significativement sa hauteur et également de favoriser une distribution symétrique de gaz. Cet aspect est d'autant plus intéressant que le premier échangeur 4 de thermosiphon peut alors se placer également sous le second échangeur 8 de chaleur principal, à côté de ce pot séparateur horizontal.

L'utilisation de l'excroissance 11 (ou appendice inférieur) permet de limiter le diamètre du récipient 1 horizontal ce qui par conséquent limite l'espace nécessaire sous l'échangeur 8 de chaleur principal.

Les première entrée 2 et seconde entrée 6 horizontales (ou décalée angulairement par exemple à 45 degrés) permettent de limiter l'espace requis au-dessus du pot séparateur pour réaliser la circuiterie qui aurait été nécessaire dans le cas d'une entrée verticale par le haut.

La solution proposée optimise avantageusement un pot de séparation de phases horizontal au sein d'un cycle frigorifique en combinant plusieurs fonctions :
- séparation de phase pour un fluide diphasique sortant d'une turbine,
- alimentation d'un échangeur de thermosiphon et séparation de phase du retour diphasique de cet échangeur de thermosiphon,
- distribution du gaz vers l'échangeur principal pour éviter l'ajout d'un distributeur entre les différents corps d'échange.

La géométrie horizontale du pot séparateur avec des sorties gaz multiples et une excroissance 11 permet de bénéficier d'une hauteur hydrostatique suffisante. Ceci permet d'avoir un pot séparateur compact qui s'intègre dans l'architecture globale. Dans le cas où un cycle de réfrigération typiquement à l'azote est utilisé (de l'air pourrait également être utilisé par exemple), l'installation comprend généralement les éléments suivants: un compresseur d'azote, un échangeur de chaleur, une turbine d'azote et un pot séparateur de phases. Le pot selon l'invention y peut être intégré avec tout ou partie des avantages ci-dessus.

Il est possible de prévoir deux échangeurs 4, 8 chaleur distincts : un premier échangeur 2 de chaleur dit de thermosiphon dans lequel de l'azote liquide est partiellement vaporisé et au moins un second échangeur 8 de chaleur principal dans lequel l'azote gazeux est réchauffé.

Comme schématisé à la [Fig. 1], le pot 1 séparateur peut être utilisé dans une installation de liquéfaction comprenant un circuit 16 de gaz d'alimentation d'un gaz à liquéfier, par exemple de l'hydrogène. L'installation comprend un ensemble d'échangeur(s) 8 de chaleur en échange thermique avec le circuit 16 d'alimentation, au moins un réfrigérateur 17 cryogénique en échange de chaleur avec l'ensemble d'échangeur(s) de chaleur et configuré pour (pré)refroidir le circuit 16 de gaz d'alimentation. Le réfrigérateur 17 comprenant un circuit de gaz de cycle, par exemple de l'azote, soumis à un cycle thermodynamique pour produire une puissance froide pour pré-refroidir le circuit 16 d'alimentation.

L'ensemble d'échangeur(s) de chaleur comprend par exemple le premier échangeur 4 de chaleur de thermosiphon précité et au moins un second échangeur 8 de chaleur. Le fluide le fluide qui circule dans le pot séparateur via les entrée (s) 2, 6, 9 et sorties 3, 7, 10 étant le fluide de cycle.

Comme illustré l'installation comprend une turbine 18 dont la sortie de refoulement est raccordée à une entrée 6, 9 du récipient 1, par exemple une entrée également raccordée à une sortie du second 8 échangeur de chaleur (via une conduite munie d'une vanne 15).

Dans l'exemple de la [Fig. 4] deux sorties 7, 9 supérieures du pot séparateur alimentent en fluide respectivement deux échangeurs de chaleur 5, 8 (distincts du premier échangeur de chaleur 4 de thermosiphon). La ou les entrées 6, 9 supérieures du récipient 1 peuvent être alimentées par le ou les échangeurs de chaleur 5, 8.

## Revendications

1. Pot séparateur des phases liquide et gazeuse, par exemple pour une installation de liquéfaction d'un gaz tel que l'azote ou l'hydrogène, comprenant un récipient (1) de forme générale cylindrique s'étendant selon un direction (A) longitudinale qui est horizontale en configuration d'utilisation, la partie inférieure du récipient (1) étant pourvue d'une excroissance (11) s'étendant vers le bas et formant un volume supplémentaire communiquant avec le reste du volume cylindrique du récipient (1), l'excroissance (11) étant configurée pour créer un niveau liquide dans le récipient (1) principal ne dépassant pas 500mm de hauteur de liquide, le récipient (1) comprenant une première entrée (2) de fluide située dans sa partie supérieure, une première sortie (3) située en partie inférieure de l'excroissance (11), la première entrée (2) et la première sortie (3) étant destinées à être raccordées à un premier échangeur (4) de chaleur pour former un thermosiphon, le récipient (1) comprenant une seconde entrée (6) distincte de la première entrée (2) et située dans sa partie supérieure et une seconde sortie (7) distincte de la première sortie (3) et située dans sa partie supérieure, la seconde entrée (6) et la seconde sortie (7) étant configurées pour être reliées à au moins un second (5, 8) échangeur de chaleur et pour respectivement collecter un fluide au moins en partie liquide et renvoyer un fluide gazeux.

2. Pot séparateur selon la revendication 1, **caractérisé en ce que** l'excroissance (11) a une forme cylindrique s'étendant selon un axe vertical et un diamètre dans un plan perpendiculaire à l'axe vertical qui est compris entre 100 mm et 2000 mm pour limiter l'entraînement de bulles avec le liquide.

3. Pot séparateur selon l'une quelconque des revendications 1 à 2, **caractérisé en ce que** le récipient (1) comprend une troisième sortie (10) située dans sa partie supérieure et distincte de la seconde sortie (7), la troisième sortie (10) étant destinée à être reliée par exemple à le au moins un second (8) échangeur de chaleur pour lui envoyer un flux de fluide gazeux.

4. Pot séparateur selon la revendication 3, **caractérisé en ce que** les sorties (7, 10) situées dans la partie supérieure sont décalées selon la direction (A) longitudinale.

5. Pot séparateur selon l'une quelconque des revendications 1 à 4, **caractérisé en ce que** le récipient (1) comprend une troisième entrée (9) de fluide configurée pour recevoir un flux de fluide gazeux ou diphasique, la troisième entrée (9) de fluide étant située dans la portion supérieure du récipient (1) et étant distincte des première (2) et deuxièmes (6) entrées.

6. Pot séparateur selon l'une quelconque des revendications 1 à 5, **caractérisé en ce que** les entrées (2, 6, 9) situées dans la partie supérieure du récipient (1) sont décalées dans un plan perpendiculaire à la direction (A) longitudinale, par exemple selon un angle compris entre 45 et 90 degrés par rapport à la verticale.

7. Installation cryogénique comprenant un pot séparateur selon l'une quelconque des revendications 1 à 6 et un premier échangeur (4) de chaleur dont deux extrémités sont raccordées respectivement via des conduites (12, 11) à la première sortie (3) et à la première entrée (2).

8. Installation selon la revendication 7, **caractérisée en ce qu'**elle comprend au moins un second échangeur (5, 8) dont deux extrémités sont raccordées respectivement via des conduites (13, 14) à la seconde entrée (6) et à la seconde sortie (7) .

9. Installation selon la revendication 8 **caractérisée en ce que** le au moins un second échangeur (8) de chaleur comprend plusieurs corps d'échange, et **en ce que** les différentes sorties (7, 10) sont reliées respectivement à des corps d'échange différents du même échangeur de chaleur.

10. Installation selon l'une quelconque des revendications 8 à 9, comprenant une turbine (18) dont la sortie de refoulement est raccordée à une entrée (6, 9) du récipient (1), par exemple une entrée également raccordée au second (8) échangeur de chaleur.

11. Installation selon l'une quelconque des revendications 8 à 10 comprenant un circuit (16) de gaz d'alimentation d'un gaz à liquéfier, un ensemble d'échangeur(s) de chaleur en échange thermique avec le circuit (16) d'alimentation, un réfrigérateur (17) cryogénique en échange de chaleur avec l'ensemble d'échangeur(s) de chaleur et configuré pour (pré)refroidir le circuit (16) de gaz d'alimentation, le réfrigérateur (17) comprenant un circuit de gaz de cycle, par exemple de l'azote, soumis à un cycle thermodynamique pour produire une puissance froide, dans lequel l'ensemble d'échangeur(s) de chaleur comprend au moins l'un parmi le premier échangeur (4) de chaleur, le second échangeur (8) de chaleur et en ce que le fluide qui circule dans le pot séparateur via les entrée(s) (2, 6, 9) et sorties (3, 7, 10) est le fluide de cycle.
